# EUROPEAN PATENT APPLICATION

(11) **EP 1 746 435 A1**
(43) Date of publication of application: **24.01.2007**
(21) Application number: 06015114.9
(22) Date of filing: 20.07.2006
(51) Int. Cl.: G01S 5/14

(54) **Terminal apparatus, control method of terminal apparatus, control program for terminal apparatus**

(30) Priority: 21.07.2005 JP 2005211378
(71) Applicant: SEIKO EPSON CORPORATION, Shinjuku-ku, Tokyo 163-0811 (JP)
(72) Inventor: Kurata, Tomoyuki, Suwa-shi Nagano-ken 392-8502 (JP)
(74) Representative: HOFFMANN EITLE

(57) **Abstract**

A terminal apparatus for positioning based on satellite signals from positioning satellites includes: satellite signal receiving means for receiving the satellite signals; positioning position information generating means for generating positioning position information which indicates a position of the terminal apparatus based on the satellite signals; moving vector information generating means for generating moving vector information which indicates moving vectors constituted by a moving direction and a moving distance of the terminal apparatus at predetermined time intervals by controlling movement history measuring means constituted by a rotational speed sensor, an acceleration sensor and a magnetic sensor; estimated position information generating means for generating estimated position information which indicates an estimated position of the terminal apparatus at the current time based on the positioning position information and the moving vector information; and estimated position information outputting means for outputting the estimated position information.

## Description

This application claims the priorities benefit under 35 U.S.C.§ 119 of Japanese Patent Application No.2005-211378 filed on Jul 21, 2005, which is hereby incorporated in its entirety by reference.

### BACKGROUND

### 1. Technical Field

The present invention relates to a terminal apparatus which uses signals frompositioning satellites, a control method of the terminal apparatus, a control program for the terminal apparatus, and a computer readable recording medium for storing the control program for the terminal apparatus.

### 2. Related Art

Conventionally, positioning systems for positioning a current position of each GPS (Global Positioning System) receiver using a satellite navigation system such as GPS have been practically used (e.g., JP-A-11-125666).

Such GPS receiver, for example, receives signals (hereinafter, referred to as satellite signals) from multiple GPS satellites, and calculates distances (hereinafter, referred to as pseudo distances) between each of the GPS satellite and the GPS receiver based on the respective phases of the received signals, and then positions the respective current positions using satellite orbit information of each GPS satellite putted on the satellite signals received from each GPS satellite and the above-mentioned pseudo distances.

However, there is a time lag (time difference) between positioning and outputting the result of the positioning by the GPS receiver. Accordingly, the results of positioning which are output without any changes cannot show the positions at the current time precisely. In addition, since positioning is carried out at the fixed time intervals, such as for every one second (s), the results of positioning which are output without any changes cannot show the positions during positioning precisely.

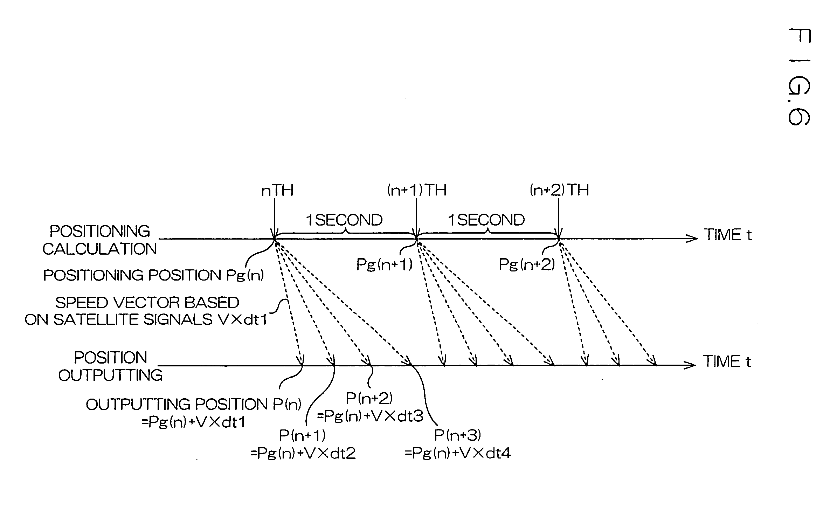

Conventionally, a method as illustrated in Fig. 6 has been used to resolve such problem.

Fig. 6 illustrates a method of outputting positions according to a prior art.

Conventionally, as illustrated in Fig. 6, a speed vector V (unit vector) has been calculated based on satellite signals when calculating a positioning position Pg (n), for example, and an outputting position P (n) or the like has been estimated based on the speed vector V and elapsed time dt1 after completion of positioning.

However, in the above-mentioned prior art, there are problems that the precision of the speed vector V is poor, and the precision of the outputting position P (n) may decrease depending on the satellite signal receiving state.

In addition; in the above-mentioned prior art, it is assumed that the movement state of the GPS receiver is kept as shown by the speed vector V for a certain period, however, it is not sure that the GPS receiver keeps the movement state as shown by the speed vector V. Especially, there is a great possibility that as the elapsed time dt becomes longer, the speed vector V once generated may not show the movement state of the GPS receiver precisely. This develops a problem that the precision of the outputting position P (n + 1) or the like may decrease.

### SUMMARY

Therefore, an advantage of some aspects of the invention is to provide a terminal apparatus capable of precisely estimating the position at the current time, a control method of the terminal apparatus, a control program for the terminal apparatus, and a computer readable recording medium for storing the control program for the terminal apparatus.

In order to achieve the above object, a terminal apparatus for positioning based on satellite signals from positioning satellites according to a first aspect of the invention includes: satellite signal receiving means for receiving the satellite signals; positioning position information generating means for generating positioning position information which indicates a position of the terminal apparatus based on the satellite signal; moving vector information generating means for generating moving vector information which indicates moving vectors constituted by a moving direction and a moving distance of the terminal apparatus at predetermined time intervals by controlling movement hi story measuring means constituted by a rotational speed sensor, an acceleration sensor and a magnetic sensor; estimated position information generating means for generating estimated position information which indicates an estimated position of the terminal apparatus at the current time based on the positioning position information and the moving vector information; and estimated position information outputting means for outputting the estimated position information.

With the structure according to the first aspect of the invention, the terminal apparatus can generate the moving vector information without using the satellite signals because it has the moving vector information generating means. Accordingly, the accuracy of the moving vector information is not affected by a receiving state of the satellite signals.

In addition, the terminal apparatus can generate estimated position information which indicates an estimated position of the terminal apparatus at the current time based on the positioning position information and the moving vector information using the estimated position information generatingmeans. In other words, it can generate the estimated position information based on the moving vector information which is reliable information, without assuming that the terminal apparatus keeps the movement state at the certain time.

Accordingly, with the structure according to the first aspect of the invention, the position at the current time can be estimated precisely.

A second aspect of the invention is a terminal apparatus with the structure according to the first aspect of the invention, wherein the predetermined time intervals are shorter than the time intervals at which the positioning position information generating means generates the positioning position information.

With the structure according to the second aspect of the invention, the predetermined time intervals are shorter than the time intervals at which the positioning position information generating means generates the positioning position information, allowing precise estimation of the position at the current time before the positioning position information generating means generates new positioning position information.

A third aspect of the invention is a terminal apparatus with the structure according to any of the first and the second aspect of the invention, wherein the estimated position information generating means generates the estimated position information by adding each of the moving vectors assuming that the position of the terminal apparatus indicated in the positioning position information is a base point.

With the structure according to the third aspect of the invention, the estimated position information generating means generates the estimated position information by adding each of the moving vectors assuming that the position of the terminal apparatus indicated in the positioning position information is abase point, allowing generation of the estimated position information which accurately reflects the movement state of the terminal apparatus.

In order to achieve the above obj ect, a control method of a terminal apparatus according to a fourth aspect of the invention includes the steps of: receiving satellite signals by means of a terminal apparatus for positioning based on the satellite signals from positioning satellites; generating positioning position information which indicates a position of the terminal apparatus based on the satellite signals by means of the terminal apparatus; generating moving vector information which indicates moving vectors constituted by a moving direction and a moving distance of the terminal apparatus at predetermined time intervals by controlling movement history measuring means constituted by a rotational speed sensor, an acceleration sensor and a magnetic sensor by means of the terminal apparatus; generating estimated position information which indicates an estimated position of the terminal apparatus at the current time based on the positioning position information and the moving vector information by means of the terminal apparatus; and outputting the estimated position information by means of the terminal apparatus.

In order to achieve the above object, a control program for a terminal apparatus according to a fifth aspect of the invention instructs a computer to perform the steps of: receiving satellite signals by means of a terminal apparatus for positioning based on the satellite signals from positioning satellites; generating positioning position information which indicates a position of the terminal apparatus based on the satellite signals by means of the terminal apparatus; generating moving vector information which indicates moving vectors constituted by a moving direction and a moving distance of the terminal apparatus at the predetermined time intervals by controlling movement history measuring means constituted by a rotational speed sensor, an acceleration sensor and a magnetic sensor by means of the terminal apparatus; generating estimated position information which indicates an estimated position of the terminal apparatus at the current time based on the positioning position information and the moving vector information by means of the terminal apparatus; and outputting the estimated position information by means of the terminal apparatus.

In order to achieve the above object, a computer readable recording medium for storing the control program for the terminal apparatus according to a sixth aspect of the invention instructs a computer to perform the steps of : receiving satellite signals by means of the terminal apparatus for positioning based on the satellite signals from positioning satellites; generating positioning position information which indicates a position of the terminal apparatus based on the satellite signals by means of the terminal apparatus; generating moving vector information which indicates moving vectors constituted by a moving direction and a moving distance of the terminal apparatus at the predetermined time intervals by controlling movement history measuring means constituted by a rotational speed sensor, an acceleration sensor and a magnetic sensor by means of the terminal apparatus; generating estimated position information which indicates an estimated position of the terminal apparatus at the current time based on the positioning position information and the moving vector information by means of the terminal apparatus; and outputting the estimated position information by means of the terminal apparatus.

### BRIEF DESCRIPTION OF THE DRAWINGS

The invention will be described with reference to the accompanying drawings, wherein like numbers reference like elements.

Fig. 1 schematically shows a terminal and the like in an embodiment according to the invention.

Fig. 2 schematically shows a main hardware structure of a terminal.

Fig. 3 schematically shows a main software structure of the terminal.

Fig. 4A shows an example of vector information and the like.

Fig. 4B shows an example estimated position information generating program.

Fig. 4C shows an example of estimated position calculated by prior art.

Fig. 5 schematically shows a flowchart of an operation example of the terminal.

Fig. 6 shows a method of outputting positions according to a prior art.

### DESCRIPTION OF EXEMPLARY EMBODIMENTS

Hereinafter, with reference to the drawings, the preferred exemplary embodiments of the invention will be described in detail.

The following embodiments are given various limitations that are preferable technically because they are the exemplary specific examples of the invention, however, the scope of the invention is not limited to these aspects unless there is a particular description to limit the invention in the following description.

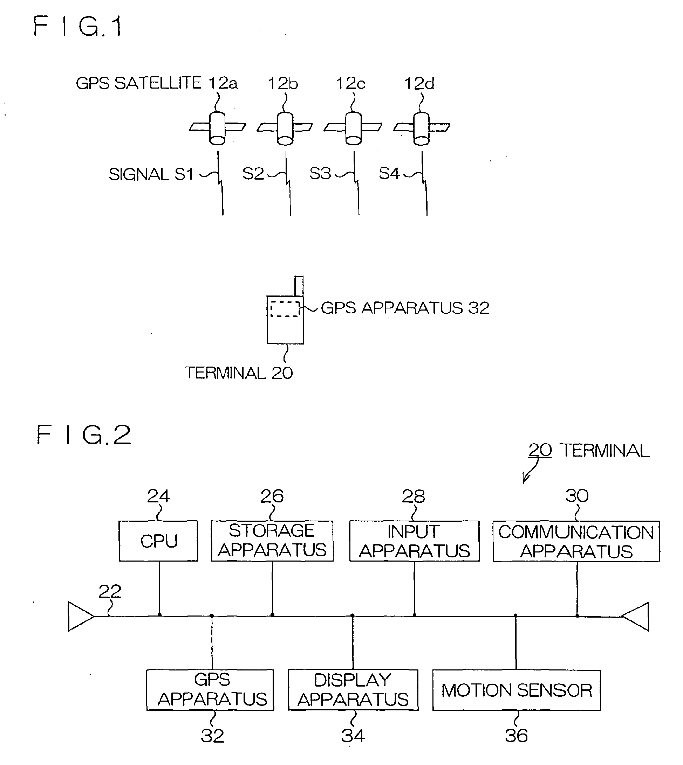

Fig. 1 schematically shows a terminal 20 and the like in an embodiment according to the invention. The terminal 20 is an example of a terminal apparatus.

The terminal 20 can receive signals S1, S2, S3 and S4 from GPS satellites 12a, 12b, 12c and 12d, and position based on the signals S1 and the like using a GPS apparatus 32. The above-mentioned GPS satellites 12a and the like are an example of positioning satellites, and the signals S1 and the like are an example of satellite signals. The GPS apparatus 32 is an example of satellite signal receiving means.

The terminal 20 is, for example, a cellular phone, but may be a PHS (Personal Handy-phone System), a PDA (Personal Digital Assistance) or the like, and not limited to these.

The number of GPS satellites 12a and the like is not limited to this embodiment, but may be three or five or more. Main Hardware Structure of Terminal 20
Fig. 2 schematically illustrates a main hardware structure of the terminal 20.

As illustrated in Fig. 2, the terminal 20 includes a computer, which is equipped with a bus 22.

A CPU (Central Processing Unit) 24, a storage apparatus 26, and the like are connected with the bus 22. The storage apparatus 26 may be a RAM (Random Access Memory), a ROM (Read Only Memory), or the like.

In addition, an input apparatus 28 for inputting each information, a communication apparatus 30 for communicating with the outside, the GPS apparatus 32, and a display apparatus 34 for displaying each information are connected with the bus 22.

A motion sensor 36 is also connected with the bus. The motion sensor 36 is configured with combination of a plurality of ceramic gyros, which is a rotational speed sensor, a plurality of acceleration sensors which detects gravity, and a plurality of magnetic sensors which measures absolute values of orientation. The motion sensor 36 is an example of movement history measuring means.

In the motion sensor 36, a ceramic gyro is provided in every up/ down, left/ right, and forward/ backward three-dimensional direction. In addition, the magnetic sensor is provided in up/ down direction and the acceleration sensor is provided in left/ right and forward/ backward direction relative to each ceramic gyro.

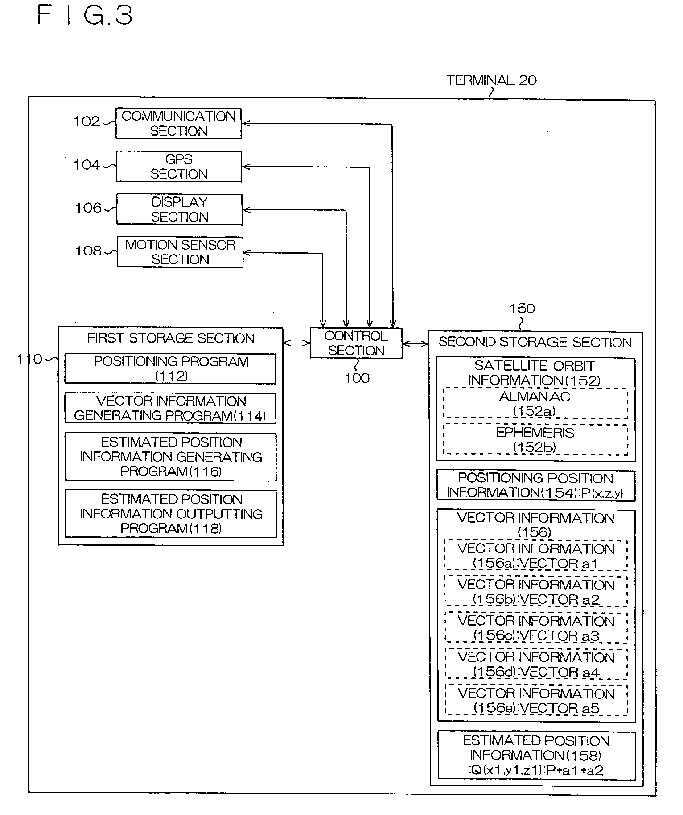

The motion sensor 36 allows measurement of a moving direction and a moving distance of the terminal 20. Main Software Structure of Terminal 20
Fig. 3 schematically illustrates a main software structure of the terminal 20.

As illustrated in Fig. 3, the terminal 20 includes a control section 100 for controlling each section, a communicating section 102 corresponding to the communication apparatus 30 in Fig. 2, a GPS section 104 corresponding to the GPS apparatus 32, a display section 106 corresponding to the display apparatus 34, a motion sensor section 108 corresponding to the motion sensor 36, and the like.

The terminal 20 also includes a first storage section 110 for storing each program and a second storage section 150 for storing each information.

As illustrated in Fig. 3, the terminal 20 stores satellite orbit information 152 in the second storage section 150. The satellite orbit information 152 includes almanac 152a which indicates rough satellite orbits of all GPS satellites 12a and the like (see Fig. 1), and ephemeris 152b which indicates accurate satellite orbits of each satellite 12a or the like. The terminal 20 uses the satellite orbit information 152 for positioning.

As illustrated in Fig. 3, the terminal 20 stores a positioning program 112 in the first storage section 110. The positioning program 112 is a program that the control section 100 obtains the signals S1 and the like using the GPS section 104, and generates positioning position information 154 which indicates a position of the terminal 20 based on the signals S1 and the like. The positioning position information 154 is an example of positioning position information. The positioning program 112, the control section 100, and the GPS section 104 are an example of positioning position information generating means.

More specifically, the control section 100 refers to the almanac 152a, and identifies the GPS satellites 12a and the like which are observable when starting positioning. The control section 100 then receives the signals S1 and the like from, for example, three or more of GPS satellites 12a and the like, and calculates a pseudo distance which is the distance between each GPS satellite 12a or the like and the terminal 20 based on the delay time between the time at which the signal S1 or the like is transmitted from each GPS satellite 12a or the like and the time at which it is received by the terminal 20. The ephemeris 152b and the above-mentioned pseudo distance are used for positioning the current position.

The control section 100 generates the positioning position information 154 for every second (s), for example.

The control section 100 stores the generated positioning position information 154 in the second storage section 150.

As illustrated in Fig. 3, the positioning position information 154 is that which indicates the position of the terminal 20 on a three-dimensional coordinate.

Here, if the control section 100 displays the positioning position information 154 on the display apparatus 34 as is, the position of the terminal 20 at the time when it is displayed (hereinafter, referred to as current time) may be deviated from the position indicated in the positioning position information 154 due to a time difference (time lag) between positioning and displaying. Accordingly, the terminal 20 has the following structure not to display the positioning position information 154 on the display apparatus 34 as is, but to display the position closer to the true position of the terminal 20 at the current time.

As illustrated in Fig. 3, the terminal 20 stores a vector information generating program 114 in the first storage section 110. The vector information generating program 114 is a program that the control section 100 controls the motion sensor 36 (see Fig. 2) to sequentially generate vector information 156a and the like which indicate a vectors a1 and the like constituted by a moving direction and a moving distance of the terminal 20 for every 0.2 seconds (s), for example. The above-mentioned 0.2 seconds (s) is an example of the predetermined time intervals. The vectors a1 and the like are an example of moving vectors, and vector information 156a and the like are an example of moving vector information. The vector information generating program 114 and the control section 100 are an example of moving vector information generating means.

The control section 100 stores the generated vector information 156a and the like in the second storage section 150.

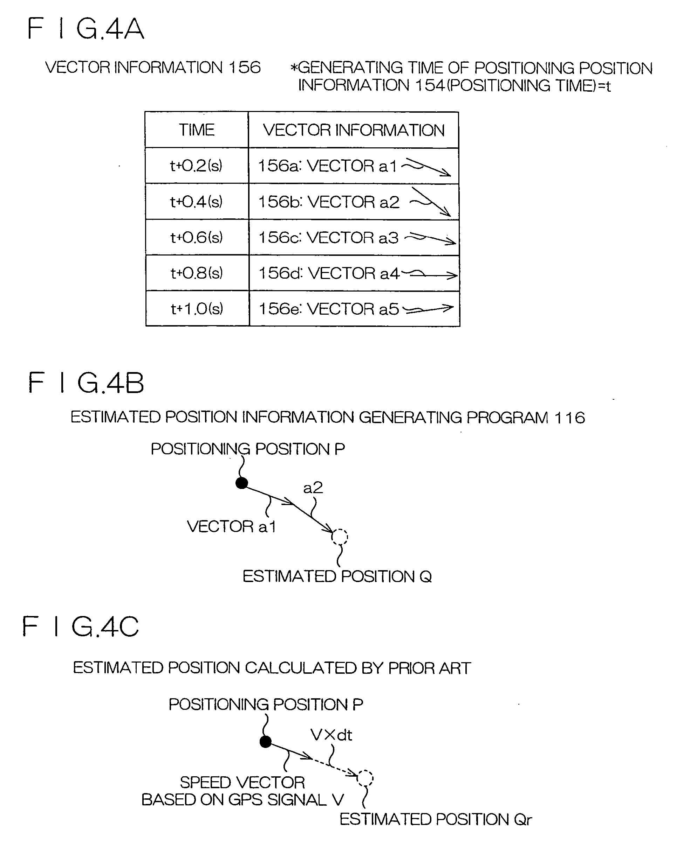

Fig. 4A illustrates an example of the vector information 156a and the like. Fig. 4B shows an example estimated position information generating program. Fig. 4C shows an example of estimated position calculated by prior art.

As illustrated in Fig. 4A, assuming that a positioning time at which the positioning position information 154 is generated is t, the vector information 156a is generated after 0.2 seconds (s) have elapsed from the time t, and thereafter vector information 156b and the like are generated for every 0.2 seconds (s) sequentially.

As illustrated in Fig. 3, the terminal 20 stores an estimated position information generating program 116 in the first storage section 110. The estimated position information generating program 116 is a program that the control section 100 generates estimated position information 158 which indicates an estimated position of the terminal 20 at the current time based on the above-mentioned positioning position information 154 and the vector information 156a and the like. The estimated position information 158 is an example of the estimated position information. The estimated positioning information generating program 116 and the control section 100 are an example of the estimated position information generating means.

More specifically, the control section 100 calculates an estimated position Q by adding vectors a1 and the like indicated in the vector information 156a and the like generated before the current time, assuming that the position P indicated in the positioning position information 154 is a base point, and generates the estimated position information which indicates the estimated position Q.

For example, assuming that the current time is 0.4 seconds (s) after the positioning time t, the vector information 156a and 156b have already been generated.

As illustrated in Fig. 4B, the control section 100 calculates the estimated position Q by adding the vectors a1 and a2 indicated in the vector information 156a and 156b, assuming that the position P indicated in the positioning position information 154 is a base point.

The control section 100 stores the generated estimated position information 158 in the second storage section 150.

As illustrated in Fig. 3, the terminal 20 stores a estimated position information outputting program 118 in the first storage section 110. The estimated position information outputting program 118 is a program that the control section 100 displays the estimated position information 158 on the display section 34 (see Fig. 2). In other words, the estimated positioning information outputting program 118 and the control section 100 are an example of the estimated position information outputting means.

The terminal 20 is configured as described above.

As mentioned above, the terminal 20 can generate the vector information 156a and the like without using the signals S1 and the like from the GPS satellites 12a and the like. Accordingly, the precision of the vector information 156a and the like is not affected by the receiving state of the signals S1 and the like.

In addition, the terminal 20 can generate the estimated position information 158 which indicates the estimated position of the terminal 20 at the current time based on the positioning position information 154 and the vector information 156a and the like. This means that the terminal 20 can calculate the estimated position Q based on the vectors a1 or the like which is reliable information obtained through actual measurement, as illustrated in Fig. 4B.

In other words, the terminal 20 does not estimate an estimated position Qr based on an elapsed time dt by assuming that the movement state of the GPS receiver keeps the state as shown in the speed vector V (unit vector) which has been generated based on the GPS signals as the prior art shown in Fig. 4C, but generates the estimated position information 158 by adding each vector a1 or the like assuming that the position P of the terminal 20 indicated in the positioning position information 154 is base point, allowing generation of the estimated position information 158 which accurately reflects the movement state of the terminal 20.

Accordingly, the structure of the terminal 20 allows precise estimation of the position at the current time.

In addition, as mentioned above, the time intervals at which the terminal 20 generates the vector information 156a and the like are shorter than those for generating the positioning position information 154, allowing precise estimation of the position at the current time before the terminal 20 generates new positioning position information 154.

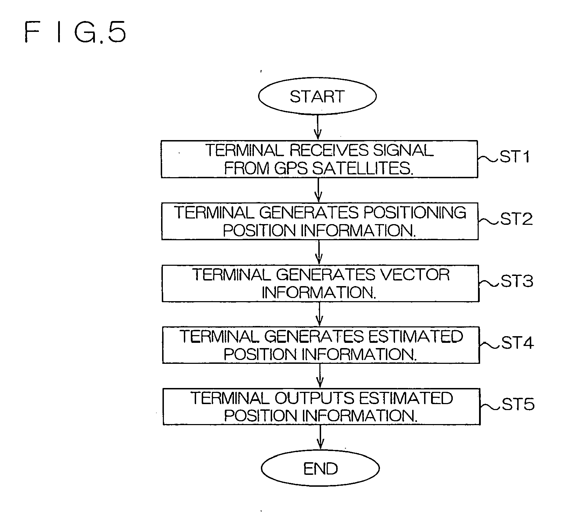

The structure of the terminal 20 in the embodiment according to the invention is described above. The operation example is hereinafter described mainly using Fig. 5.

Fig. 5 schematically illustrates a flowchart of an operation example of the terminal 20 according to the embodiment.

First, the terminal 20 receives the signals S1 and the like from the GPS satellites 12a and the like (step ST1 in Fig. 5). The step ST1 is an example of the step of receiving satellite signals.

Subsequently, the terminal 20 generates the positioning position information 154 (see Fig. 3) (step ST2) . The step ST2 is an example of the step of generating positioning position information.

Afterwards, the terminal 20 generates the vector information 156a and the like (see Fig. 3) (step ST3). The step ST3 is an example of the step of generating moving vector information.

Next, the terminal 20 generates the estimated position information 158 (see Fig. 3) (step ST4). The step ST4 is an example of the step of generating estimated position information.

The terminal 20 then outputs the estimated position information 158 (step ST5). The step ST5 is an example of the step of outputting estimated position information.

The terminal 20 can precisely estimate and output the position at the current time through the above-mentioned steps ST1 through ST5.

Program and Computer Readable Recording Medium and the like
It is possible to provide a control program for a terminal apparatus, instructing a computer to perform the steps of receiving satellite signals, generating positioning position information, generating moving vector information, generating estimated position information, outputting estimated position information and the like of the above-mentioned operation example.

It is also possible to provide a computer readable recording medium and the like on which such control program and the like for the terminal apparatus are recorded.

A program storing medium used to install such control program and the like for the terminal apparatus on the computer, and enable them to be performed by the computer may be not only a package medium such as a flexible disc such as a floppy (R), a CD-ROM (Compact Disc Read Only Memory), a CD-R (Compact Disc Recordable), a CD-RW (Compact Disc-Rewritable), a DVD (Digital Versatile Disc) or the like, but also a semiconductor memory, a magnetic disc, or a magnetic optical disc in which a program is temporarily or permanently stored.

The present invention is not limited to the above-described respective embodiments. Further, the above-described respective embodiments may be combined with each other.

## Claims

1. A terminal apparatus for positioning based on satellite signals from positioning satellites, comprising:
satellite signal receiving means for receiving the satellite signals;
positioning position information generating means for generating positioning position information which indicates a position of the terminal apparatus based on the satellite signals;
moving vector information generating means for generating moving vector information which indicates moving vectors constituted by a moving direction and a moving distance of the terminal apparatus at predetermined time intervals by controlling movement history measuring means constituted by a rotational speed sensor, an acceleration sensor and a magnetic sensor;
estimated position information generating means for generating estimated position information which indicates an estimated position of the terminal apparatus at the current time based on the positioning position information and the moving vector information; and
estimated position information outputting means for outputting the estimated position information.

2. The terminal apparatus according to claim 1, wherein the predetermined time intervals are shorter than time intervals at which the positioning position information generating means generates the positioning position information.

3. The terminal apparatus according to any of claim 1 and 2, wherein the estimated position information generating means generates the estimated position information by adding each of the moving vectors assuming that the position of the terminal apparatus indicated in the positioning position information is a base point.

4. A control method of a terminal apparatus, comprising the steps of:
receiving satellite signals by means of a terminal apparatus for positioning based on the satellite signals from positioning satellites;
generating positioning position information which indicates a position of the terminal apparatus based on the satellite signals by means of the terminal apparatus;
generating moving vector information which indicates moving vectors constituted by a moving direction and a moving distance of the terminal apparatus at predetermined time intervals by controlling movement history measuring means constituted by a rotational speed sensor, an acceleration sensor and a magnetic sensor by means of the terminal apparatus;
generating estimated position information which indicates an estimated position of the terminal apparatus at the current time based on the positioning position information and the moving vector information by means of the terminal apparatus; and
outputting the estimated position information by means of the terminal apparatus.

5. A control program for a terminal apparatus, instructing a computer to perform the steps of:
receiving satellite signals by means of a terminal apparatus for positioning based on the satellite signals from positioning satellites;
generating positioning position information which indicates a position of the terminal apparatus based on the satellite signals by means of the terminal apparatus;
generating moving vector information which indicates moving vectors constituted by a moving direction and a moving distance of the terminal apparatus at predetermined time intervals by controlling movement history measuring means constituted by a rotational speed sensor, an acceleration sensor and a magnetic sensor by means of the terminal apparatus;
generating estimated position information which indicates an estimated position of the terminal apparatus at the current time based on the positioning position information and the moving vector information by means of the terminal apparatus; and
outputting the estimated position information by means of the terminal apparatus.

6. A computer readable recording medium for storing a control program for a terminal apparatus, instructing a computer to perform the steps of:
receiving satellite signals by means of a terminal apparatus for positioning based on the satellite signals from positioning satellites;
generating positioning position information which indicates a position of the terminal apparatus based on the satellite signals by means of the terminal apparatus;
generating moving vector information which indicates moving vectors constituted by a moving direction and a moving distance of the terminal apparatus at predetermined time intervals by controlling movement history measuring means constituted by a rotational speed sensor, an acceleration sensor and a magnetic sensor by means of the terminal apparatus;
generating estimated position information which indicates an estimated position of the terminal apparatus at the current time based on the positioning position information and the moving vector information by means of the terminal apparatus; and
outputting the estimated position information by means of the terminal apparatus.
